# EUROPEAN PATENT APPLICATION

(11) **EP 1 799 004 A1**
(43) Date of publication of application: **20.06.2007**
(21) Application number: 05027369.7
(22) Date of filing: 14.12.2005
(51) Int. Cl.: H04Q 7/38

(54) **Method and device thereof for scheduling transmissions for terminals having different bandwidth capabilities in a communications system**

(71) Applicant: SIEMENS AKTIENGESELLSCHAFT, 80333 München (DE)
(72) Inventor: Färber, Michael, 82515 Wolfrathausen (DE); Kroth, Norbert, 14482 Potsdam (DE); Raaf, Bernhard, 82061 Neuried (DE); Ulrich, Thomas, 67098 Bad Dürkheim (DE); Vesely, Alexander, 1170 Wien (AT)

(57) **Abstract**

The invention consists of a method and device arranged to schedule, in a communications system (1) supporting a dedicated bandwidth, a transmission between a radio access network (1000) and a plurality of terminals (10, 20, 30, 40, 50, 60, 70, 75, 80, 85), comprising the steps of:
- acquiring information concerning a number of active terminals of said plurality of terminals (step 1);
- grouping, upon acquisition of said information, said active terminals (10, 20, 30, 40, 50, 60, 70, 75, 80, 85) into a plurality of groups (G₁, G₂, G₃) according to a bandwidth capability of each active terminal (10, 20, 30, 40, 50, 60, 70, 75, 80, 85), wherein each group of said plurality of groups (G₁, G₂, G₃) comprises of said active terminals having a similar bandwidth capability (step 2);
- scheduling, using a timing structure, said transmission to said groups (G₁, G₂, G₃), using at least part of said dedicated bandwidth (step 3).

## Description

### Field of the invention

The invention is used in communications systems to ensure that transmissions in such communications systems are possible when mobile terminals having different bandwidth capabilities are present in such systems.

### Summary of the invention

In today's communications systems, systems built around GSM (Global System for Mobile Communications) or UMTS (Universal Mobile Telecommunication System) technologies to name but a few, have a priori knowledge of the fixed bandwidth that is being used. Resource allocations take place within this known bandwidth, by means of code or timeslot allocations.

Recent developments, such as 3G (third generation) long term Evolution communications, provide the ability to transfer to users both voice data, such as a telephone call, and non-voice data, such as instant messaging, email exchange, web site content, consider the use of a scalable bandwidth, allowing an operator to flexibly allocate the bandwidth thus adapting to the opportunities of the available spectrum.

Bandwidths under consideration, range from 1,25MHz to 20MHz, provide flexibility and thus are attractive to network operators, as they permit the possibility to scale the bandwidth of transmissions within a fixed bandwidth, in this case the fixed bandwidth preferably being 20MHz. However, not all mobile terminals can support all the different available network options that can be provided by a network operator, in terms of bandwidth requirements, due to the high costs required to manufacture mobile terminals that can support various bandwidths.

A current solution to this problem has been to define several classes of mobile terminals, where one class represents the minimum capabilities that a mobile terminal can support. A mobile terminal user then will purchase a mobile terminal depending on his/her needs.

However, this solution has the drawback that the bandwidth available is not optimised for different classes of mobile terminals. Therefore, bandwidth will be lost when transmitting to different classes of mobile terminals, leading to an inefficient use of the available bandwidth resources.

Furthermore, mobile terminals with low capabilities are supported on a single carrier. Multicarrier support, as available in CDMA 2000, provides for bandwidths as multiples of a basic minimum bandwidth. However, as cells have a certain amount of available bandwidth, it is not possible to accommodate transmissions to different classes of mobile terminals using the basic minimum bandwidth as a building block for the different transmissions, without incurring a loss of bandwidth efficiency in the cell, and consequently in the whole communications system.

A need therefore exists for a technique that can provide support for mobile terminals which have varying bandwidth capabilities in communications systems, particularly mobile and radio communications systems and at the same time also optimise the use of the bandwidth available.

With the present invention, the above mentioned issues are resolved. A plurality of mobile terminals of different capability classes can be efficiently supported in communications systems that have an allocated bandwidth. The proposed technique is responsive to the different bandwidth requirements of mobile terminals and provides for an optimisation of the use of the available bandwidth by introducing a high degree of flexibility in the manner the allocation of the bandwidth resources is performed, depending on the number of mobile terminals present.

The technique is achieved by the teachings contained in the independent method and device claims.

Said method schedules, in a communications system supporting a dedicated bandwidth, a transmission between a radio access network and a plurality of terminals, comprising the steps of:
- acquiring information concerning a number of active terminals of said plurality of terminals;
- grouping, upon acquisition of said number, said active terminals according to a bandwidth capability of each active terminal into at least two groups;
- scheduling, using a timing structure, said transmission to said at least two groups wherein for each one of said groups, said bandwidth capability modifies said timing structure.

Said device, in a communications system, comprises means arranged to schedule a transmission between said radio access network and a plurality of terminals according to claim 1.

Further advantages can be seen in the dependent claims, wherein:
Preferably, the active terminals are in a ready and/or in a block flow state, allowing for a simple and efficient way to distinguish between active and inactive terminals. Preferably, the timing structure comprises of a timing interval used for the transmission, ensuring that the timing structure is implemented in a simple and non-complicated manner.
Preferably, the active terminals are further grouped when using at least one parameter. Whereby the parameter is at least one of the following: a state of a capacity of a transmission buffer of the radio access network point, a condition of a radio signal between the radio access network and the terminals, a service requirement of said transmission. Providing the scheduling with the adaptability to take into account different parameters at any given point in time.
Preferably, the dedicated bandwidth is allocated either to a cell or to a plurality of cells of the communications system. The allocation being effected by sharing the dedicated bandwidth among the plurality of cells in a co-ordinated manner according to a bandwidth requirement of each cell of the plurality of cells. This bandwidth requirement ensuring that no bandwidth is wasted when allocation is effected. Preferably, a Frequency Division Multiple Access mode and/or a Code Division Multiple Access mode is implemented in the communications system. Providing for a versatile invention that can be implemented in a variety of access modes. Preferably, an Orthogonal Frequency Division Multiplexing technique is used in the communications system for said transmission. Providing said transmission with a high degree of resistance to interference.
Preferably, the device is a Base Station Controller or a Radio Network Controller. Providing for a versatile invention that can be implemented in a number of communications systems that use different standards.

### Short description of the drawings

The present invention will become more fully understood from the description given herein below and the accompanying drawings which are given by way of illustration only and thus are not limitative of the present invention, and wherein:
- Fig. 1: shows a typical division of a communications system into cells, wherein the inventive technique can be applied.
- Fig. 2: shows an example of the inventive technique when optimising the bandwidth and scheduling the different transmissions within a cell.
- Fig. 3: shows in a flow diagram form, the steps performed by the inventive technique.
- Fig. 4: shows an example of an alternative way to optimise the bandwidth and schedule the different transmissions within a cell.
- Fig. 5, 6, 6a, 6b: show examples of alternative embodiments of the inventive technique when applied in a multicell environment.
- Fig. 7: is a block diagram of a device according to the present invention.

### Detailed description of the invention

In systems where a dedicated bandwidth is supported by a cell or a number of cells, in order to provide support for mobile terminals having different bandwidth capabilities, a scheduling scheme is introduced that modifies the timing structure of transmissions to the mobile terminals. The terms "mobile terminal(s)", "mobile(s)", "active mobile terminal(s)", "active terminal(s)" and "terminal(s)", are equivalent, have the same meaning and are used interchangeably within the description and claims. The term "timing structure" identifies the timing sequence of timing intervals used in organising the transmissions to the mobile terminals.

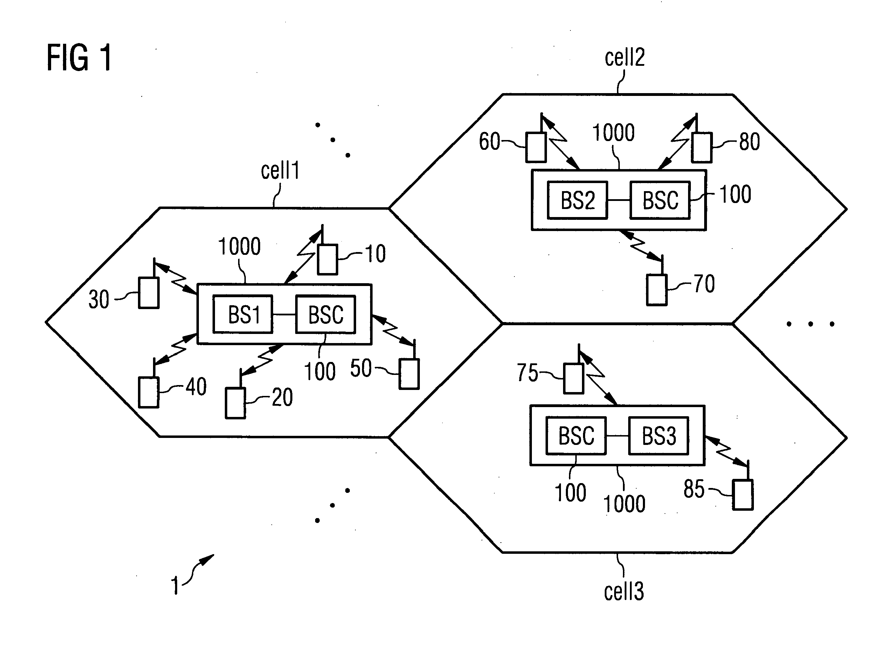

A typical communications system 1, wherein the inventive technique is applied, is shown in fig.1. It comprises of numerous coverage areas, preferably cells, three of which, cell 1, cell 2 and cell 3, are shown. For reasons of simplicity, other cells are not depicted. Additionally, the same scheduling scheme can be used when serving a number of cells.

Each coverage area has a radio access network 1000, which allows for mobile terminals to access a network such as a PSTN (Public Switched Telephone Network) or the internet. Preferably, the radio access network 1000 is a BSS (base station subsystem) or a RAN (Radio Access Network) or a WLAN AP (wireless local area network access point). In the illustrative examples provided in the description, the terms BSS and cell have been used, however this is not limitative in any way, as a person skilled in the art would know that substitution of them by other terms would not change the technical understanding of the examples.

Each cell has a base station transceiver BS1, BS2, BS3, that covers the needs of mobile terminals 10, 20, 30, 40, 50, 60, 70, 75, 80, 85 that are located within the cells. Furthermore, each base station transceiver BS1, BS2, BS3 is respectively coupled to a device 100, preferably a BSC (Base Station Controller) 100 or an RNC (Radio Network Controller), which is not depicted, for reasons of simplicity. The base station transceivers and their respectively coupled BSCs are depicted, for reasons of simplicity and ease of understanding, as one unit 1000 this unit being a BSS (Base Station Subsystem). It is however known in the art that they can also be located at a distance from each other

Each BSC 100 is in turn coupled to a MSC (Mobile Switching Centre) which in turn is coupled to a PSTN (Public Switched Telephone Network), which for reasons of simplicity are not depicted.

In the communications system of fig. 1, the dedicated bandwidth provided by the operator and supported by each cell is 20MHz. However, numerous mobile terminals with different bandwidth capabilities, for example 5MHz and 10MHz are also present in the cell. In order for the operator to support a multitude of mobile terminal capabilities and differing mobile terminal user demands the proposed technique is applied.

The BSS 1000 serving a cell gathers information regarding the number of all the mobile terminals that are active within the cell. "Active mobile terminals" identifies mobile terminals that are in a ready and/or in a block flow state within a cell.

This information can be acquired in a number of ways, one being that the BSS 1000 maintains a counter which is increased or decreased upon the registration or deregistration of a mobile terminal in the cell or by monitoring the exchange of control messages received from the mobile terminals. Part of that acquired information, contains information regarding the bandwidth capabilities of each mobile terminal. This information is easily acquired as a mobile terminal when registering in a cell, automatically provides this information to the base station.

Having gathered this information, the BSS 1000 can through a device 100 dedicate resources in the time and frequency domain. This is done by grouping the active mobile terminals into groups G₁, G₂, G₃ according to their bandwidth capabilities. Once the mobile terminals have been grouped the device 100 then proceeds to schedule the transmissions to the different groups G₁, G₂, G₃.

If a mobile terminal changes from idle mode (i.e. it is not engaged in a communication with the BSS 1000) to active mode, a service may be allocated to it, which requires less than the maximum bandwidth capability available. In such a case the device 100 may optionally group the mobile terminal into a group of less bandwidth and will schedule the transmission to the mobile terminal within this group.

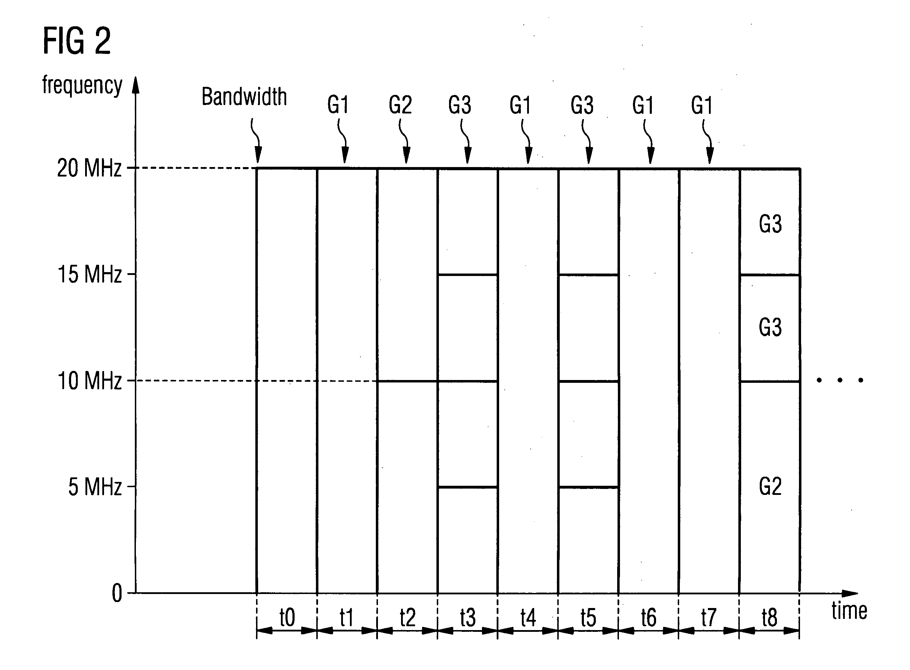

In an illustrative example of fig. 2, the mobile terminals have been divided into three separate groups G₁, G₂, G₃. However, a person skilled in the art would recognise that depending on the number of mobile terminals and their bandwidth requirements, it is possible to have more than three groups or less than three groups.

In order to achieve this, a timing structure used for the transmission on the supported bandwidth, in this example 20MHz, is modified by taking into account the required bandwidth capabilities of the grouped terminals. The timing structure has a minimum time period (or time interval) that a transmission can last. This is sometimes also referred to as a TTI (Transmission Time Interval). Depending on the amount of data that has to be transmitted to each group G₁, G₂, G₃, one or more time intervals are used for a transmission to a particular group.

Accordingly, the scheduling allows for a transmission using the full bandwidth, 20MHz in this example, for a certain time period to be made to the group G₁ of mobile terminals that have a 20MHz bandwidth capability. Then transmissions at a bandwidth supported by the next group G₂ in this example 10MHz and then to the next group G₃ at 5MHz are made.

The sequence of transmissions can be done in a round-robin manner, e.g. first transmission for the mobiles terminals having a 20MHz support capability, the next one at 10MHz and then at 5MHz. Alternatively, the sequence of transmissions can be done depending on whether there exists data to be transmitted to a particular group. For example if there is no data destined for the group of mobile terminals support 10MHz, the device 100 will simply schedule transmissions for the other two bandwidths, until data for the 10MHz group arrives.

To achieve better bandwidth efficiency, mobile terminals that support a low bandwidth can receive other UARFCN (UTRA-Absolute Radio Frequency Channel Number) allocations by the device 100 as the higher bandwidth capable mobile terminals. The UARFCN is used to describe the radio channel allocation within a range of spectrum. For example, in WCDMA (Wideband-CDMA), a carrier occupies a 5MHz block, but the UARFCN is in a 200KHz raster, which allows a fine adjustment of allocating the 5MHz block in the spectrum domain. Therefore, terminals using the maximum bandwidth, in our example 20MHz, need an UARFCN which allocates the 20MHz in the allocated spectrum. The allocations of smaller band slots therefore need other UARFCN numbers to describe the positions in the spectrum.

Additionally, OFDM (Orthogonal Frequency-Division Multiplexing) is used for the transmissions in the provided illustrative examples. OFDM is a transmission technique based upon the idea of FDM (Frequency-Division Multiplexing). In FDM, multiple signals are sent out at the same time, but on different frequencies. In OFDM, a single transmitter transmits on many different orthogonal (independent) frequencies. Because the frequencies are so closely spaced, each one only has room for a narrowband signal. This, coupled with the use of advanced modulation techniques on each component, results in a signal with high resistance to interference.

Depending on the number of groups G₁, ..., G₃ that are created to handle the numerous mobile terminals, the time resources are pooled together and respectively dedicated to each group. When a small number of mobile terminals with a high bandwidth capability exists, e.g. mobile terminals that support 20MHz, the time intervals that the device 100 allocates for transmission to the group G₁ are less than if there is a large number of mobile terminals where more time intervals are allocated. Similarly, this applies when the number of mobile terminals with a low or medium bandwidth capability also exist.

Within the time interval that a transmission is effected to a particular group, the transmission can also be further divided based on the code used by each mobile terminal, on the sub-carriers used, on time required for the transmission or on combinations of these. Naturally, the device 100 schedules the transmission times both for a downlink transmission from the BSS 1000 to the different groups G₁, G₂, G₃, comprising of mobile terminals and for an uplink transmission from the different groups G₁, G₂, G₃ to the BSS 1000.

In fig. 2, time interval t₁ is used for a transmission for the G₁ group, t₂ is used for a transmission for the G₂ group, t₃ is used for a transmission for the G₃ group, t₄ is used for a transmission for the G₁ group, t₅ is used for a transmission for the G₃ group, t₆ is used for a transmission for the G₁ group, t₇ is used for a transmission for the G₂ group and so on in time.

Also, as it can be seen from fig. 2, that the device 100 can either schedule the transmissions in a round-robin manner as shown in timing intervals t₁, t₂, t₃, t₄ for groups G₁, G₂, G₃ and G₁ or it can schedule the transmissions depending on whether there exists data to be transmitted/received to/from a particular group, shown in timing intervals t₅, t₆, t₇.

Furthermore as it can be seen in timing intervals t₂, t₃, t₅, and t₇, the transmissions effected to the corresponding groups G₂, G₃ are further divided into sub-groups to address the issues of the bandwidth capabilities of the active terminals in the groups. Within the G₂ group there exist active terminals that support a 10MHz bandwidth within the frequency range of 0 to 10 and from 10 to 20MHz respectively. Similarly, for the G₃ group, there exist active terminals that support a 5MHz bandwidth within the frequency range of 0 to 5, from 5 to 10, from 10 to 15 and 15 to 20MHz respectively. In this way, during their respective time intervals, all the available bandwidth is used, and there is no reduction in bandwidth efficiency.

Also the further division can be based on the CDMA code used by each active terminal, on the sub carriers used, on time required for the transmission or on combinations of these.

Additionally, shown in timing interval t₈ the device 100 can also schedule a transmission to different groups within the same time interval. This is possible because of the use of different codes for each transmission to a particular group as well as on the amount of data being transmitted to each group. Thus, in time interval t₈ a transmission to group G₂ and in particular to active terminals supporting a 10MHz bandwidth within the frequency range of 0 to 10MHz is performed as well as to group G₃ and in particular to active terminals supporting a 5MHz bandwidth within the frequency range of 10 to 15MHz and 15MHz to 20MHz. This is also possible, when for example two groups have similar bandwidth requirements but use different frequencies for the transmission/reception of data.

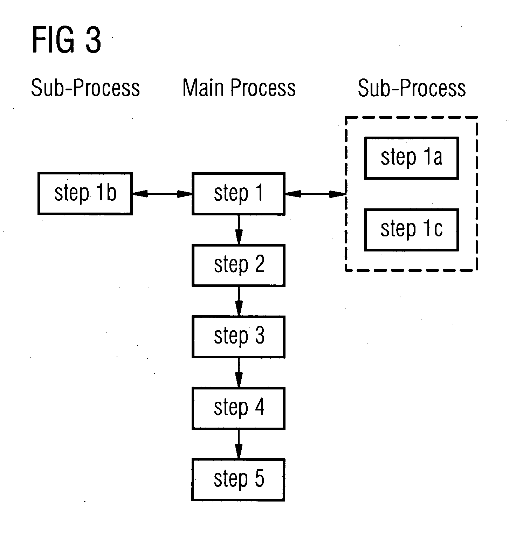

In fig. 3, the algorithm shows the different steps that the inventive technique performs. In step 1, information is acquired concerning the number of active mobile terminals. In step 1a, which is a sub-process, the number of active terminals and the bandwidth capability of each active terminal. Step 1c is an optional step, which is performed when there exist further parameters that are needed to be taken into account. In step 2, the active terminals are grouped in at least two groups G₁, ..., G₃ according to the bandwidth capability of each terminal. Naturally, depending on the number of terminals and their respective bandwidth capabilities, more than two groups can be formed. In step 3, the transmissions are scheduled to the different groups, using a timing structure that is modifiable by the bandwidth capabilities of the mobile terminals that are comprised in each group. Once the scheduling has been performed the transmission begins in step 5.

Prior to the transmission by the BSS 1000 of a sequence of transmissions to the different groups, a message is transmitted via the control signalling, in step 4, in a time interval t₀, to the active terminals, carrying required mapping information, whereby the relevant centre frequencies and the allowed bandwidths for the different time intervals of the transmissions. In this way, each active terminal is aware of the time interval in which it will receive and/or it is allowed to transmit a transmission and the frequencies at which the transmission is to be transmitted at. The message is transmitted periodically, prior to every transmission sequence or alternatively constantly at certain centre frequencies corresponding to the centre frequencies of the different groups. Alternatively, it can also be transmitted at dedicated subcarriers in every block of frequencies, for example on one control channel per 5MHz block. Alternatively, the MAC (Media Access Control) layer can be used to transmit the mappings.

Due to the fact that in a communications system 1, a large number of mobile terminals are mobile and will move from one location to another, the number of active mobile terminals within a cell can vary over time. In order to maintain an efficient scheduling and to efficiently allocate resources, a sub-process, in step 1b, continuously monitors the cell for any changes in the number of active mobile terminals present. Whenever a change occurs, this is inputted into step 1 for further processing and when it is necessary to modify existing groups.

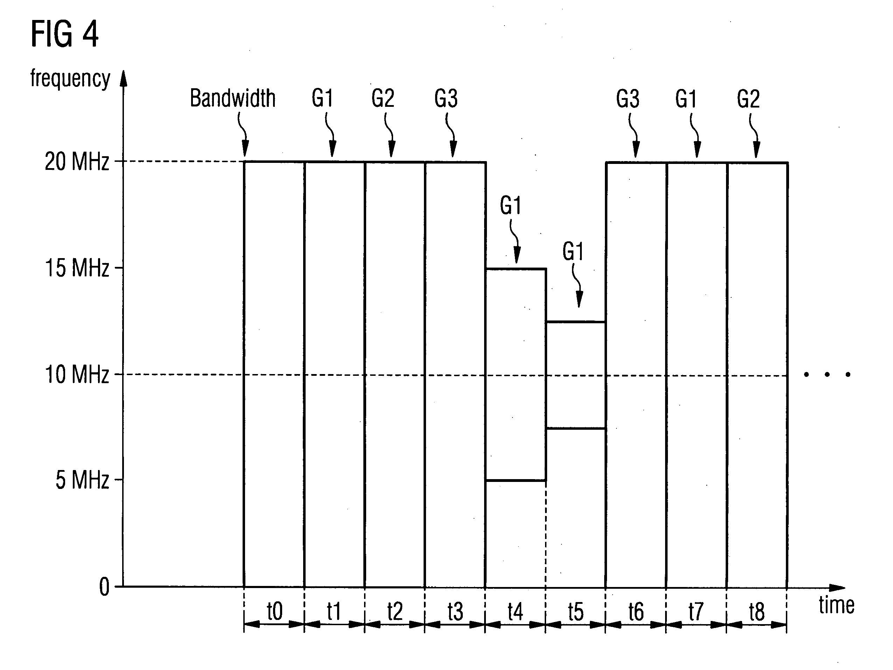

In another illustrative example, shown in fig. 4, the results of applying the inventive technique, in an alternative situation, are shown. In this situation, the scheduling of transmissions is coupled with the alignment of the available bandwidth to the different radio channel needs. By assuming a scalable carrier bandwidth in a given band, defined by: total bandwidth = n * minimum bandwidth, where n = 1, 2, 3 ..., the device 100 can also take other parameters into account than only the mobile terminal capability. These parameters can be the state of the capacity of the transmission buffer of the BSS 1000, the condition of a radio signal between said BSS 1000 and the mobile terminals 10, 20, 30, 40, 50, 60, 70, 75, 80, 85 a service requirement of the transmission, such as the delay, the jitter present, the peak-average-ratio etc. By taking them into account, the power used to transmit is spread over the used bandwidth and a more efficient use of the available bandwidth resources is achieved.

Having gathered the information regarding the number of active mobile terminals 10, 20, 30, 40, 50 in the cell and gathering information regarding any other parameters that need to be taken into account (step 1c in fig. 2) and forming groups that comprise the mobile terminals, the device 100 allocates the time intervals for the required transmissions. In the example, the active mobile terminals 10, 20, 30, 40, 50 in cell 1 are divided into three groups G₁, G₂, G₃ according to the bandwidth supported by each active mobile terminal. In this case G₁ comprises of the mobile terminals that support 20MHz of bandwidth, G₂ comprises of the mobile terminals that support 10MHz of bandwidth and G₃ comprises of the mobile terminals that support 5MHz of bandwidth.

The device 100 then schedules the timing intervals that are required for the transmissions to each particular group.

These timing intervals, form the timing structure used by the scheduler. In fig. 4, it can be seen that the timing structure of the transmissions is divided into a number of timing intervals t₁, t₂, ... t₈.

Depending now on the amount of data that has to be transmitted to each particular group, data is transmitted in one or more time intervals.

t₁ is used for a transmission for the G₁ group, t₂ is used for a transmission for the G₂ group, t₃ is used for a transmission for the G₃ group, t₄ is used for a transmission for the G₁ group, t₅ is used for a transmission for the G₁ group, t₆ is used for a transmission for the G₃ group, t₇ is used for a transmission for the G₁ group, t₈ is used for a transmission for the G₂ group and so on in time.

As it can be seen from fig. 4, the device 100 can either schedule the transmissions in a round-robin manner as shown in timing intervals t₁, t₂, t₃, for groups G₁, G₂, and G₃ or it can schedule the transmissions depending on whether there exists data to be transmitted to a particular group, shown in timing intervals t₄ to t₈.

In particular, as it can be seen in fig. 4, the device 100, for timing intervals t₄, t₅ takes into account the fact that for those time periods further parameters need to be taken into account in order to scale the bandwidth of the transmissions. These parameters can be the state of the capacity of the transmission buffer of the BSS 1000, the condition of a radio signal between said BSS 1000 and the mobile terminals 10, 20, 30,40, 50, a service requirement of the transmission, such as the delay, the jitter present, the peak-average-ratio, a measure of a link budget between the base station 1000 and the mobile terminals etc. In the example, group G₁ has certain parameters that need to be taken into account. Once these are considered, the device 100 scales the transmissions, respectively in each time interval. In the example, due to bad radio conditions in time intervals t₄ and t₅, the power used for the transmission to the active terminals in group G₁ does not cover the entire available bandwidth, but just part of the bandwidth. During such intervals where other parameters need to be taken into account, using a smaller than the full bandwidth available, reduces momentarily the spectral efficiency, but on the other hand greatly improves the achievable range of the transmission. For sensitive services such as video this is highly advantageous. Also, this allows for a link adaptation of high bandwidth capability mobile terminals, in our example 20MHz capable mobile terminals, to a smaller bandwidth thus achieving, better range capabilities for a limited period of time.

When applying this, for example, to OFDM the power outputted from a power amplifier is distributed equally to the sub carriers. Reducing the bandwidth allows for the distribution of the power on less carriers, where additionally the receiver sensitivity of the mobile terminals increases by smaller bandwidths. This provides the device 100 with the opportunity to schedule, on the MAC layer, mobile terminals with a small block of bandwidth, even if the bandwidth capability of the mobile terminal allows for more bandwidth. To maintain the physical link, a compromise with the maximum throughput possible is achieved by bandwidth reduction. In this case, the entire power of the power amplifier is not distributed over the maximum possible bandwidth.

Similarly to the example shown in fig. 2, prior to the transmission by the BSS 1000 of a sequence of transmissions to the different groups, a message is transmitted via the control signalling, in step 4, in a time interval t₀, to the active terminals, carrying required mapping information, whereby the relevant centre frequencies and the allowed bandwidths for the different time intervals of the transmissions.

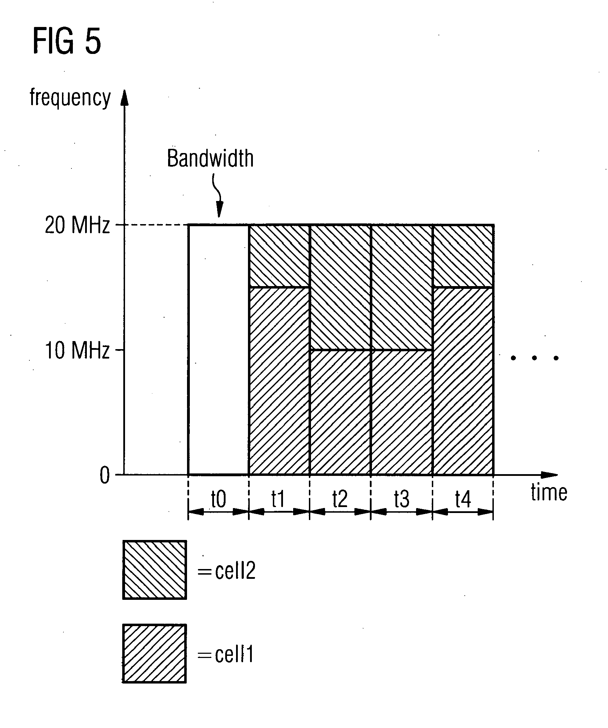

In an alternative embodiment, shown in fig. 5, the total bandwidth is shared among multiple cells. This is performed in a co-ordinated manner between the cells. When one cell uses a large bandwidth another cell in the vicinity will use a small bandwidth. As it can be seen, cell 1, during time interval t₁, uses a large part of the bandwidth 15MHz and during that same time interval cell 2 uses only 5MHz of bandwidth. Over time this allocation changes depending on the different bandwidth requirements of the cells, as it can be seen over time intervals t₂ to t₄.

The bandwidth allocations to the different cells is co-ordinated by the BSC in such a way that the pattern they form is similar to a jigsaw in time and frequency. In this way, the bandwidth that would not be utilised in some instances, as shown in fig. 4, can be used by a neighbouring cell. Thus increasing the efficiency of the use of the available bandwidth. The embodiment shown in fig. 5 corresponds to a communications system using FDMA, wherein transmissions in neighbouring cells are entirely separated in the frequency domain.

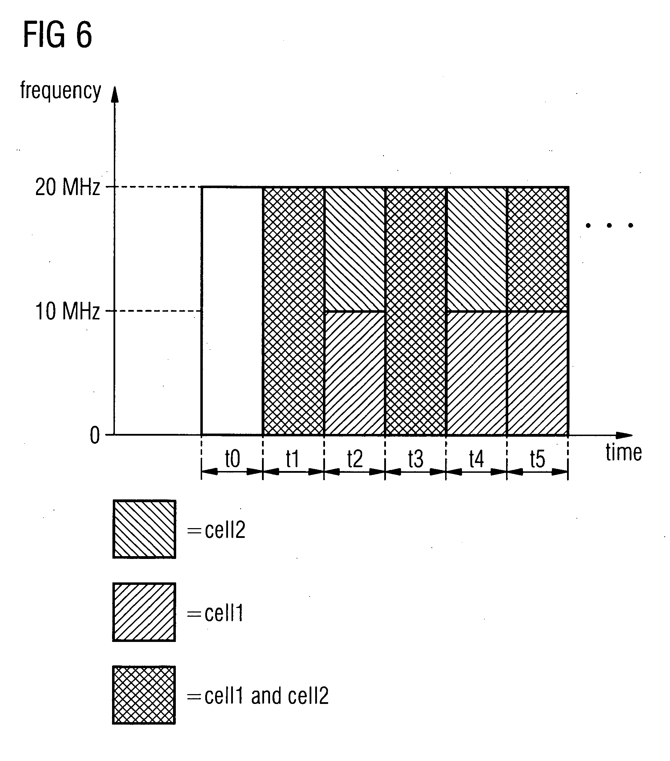

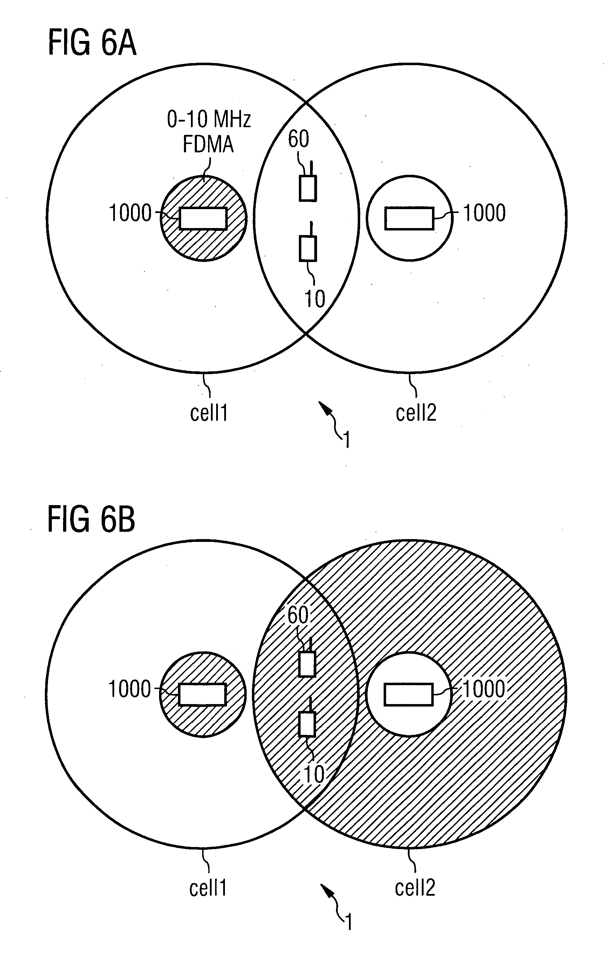

Fig. 6 corresponds to a communications system 1 using CDMA. The CDMA provides the system with an additional multiplexing capability. In time intervals t₁ to t₅, it can be seen that the bandwidth can be allocated to both cell 1 and cell 2 as in time intervals t₁ and t₃, while in other like t₂ and t₄, it is divided between the cells. Within the same time interval in a particular bandwidth block, independent transmissions to different active terminals can take place, separated by the allocated codes. This can be executed within one particular cell, or between two different cells in the same time interval. This is useful for low rate signalling and user data channels between BSS 1000 and active terminals 10, 20, 30, 40, 50, 60, 70, 80.

The inventive technique for scheduling transmissions to mobile stations, also works when mobile terminals 10, 60 are located at the edge of a cell, where there is an overlap with adjoining cells. In this case mobile terminals can suffer from power shortage and interference due to overlapping of cell coverage, as depicted in figures 6a and 6b.

In fig. 6a, the core of cell 1 uses FDMA while the cell edge of cell 1 and cell 2 use different codes to differentiate the transmissions between the BSSs 1000 of each cell and the mobile terminal located in the overlap area.

In fig. 6b, the cell edge of cell 1 and the core of cell 2 use the same frequency, while the cell edge of cell 2 and the core of cell 1 use the same frequency. In this case no codes are necessary. In both cases depicted in figures 6a and 6b, a reduction of interference is achieved. Additionally, it is possible to enhance the detection of transmissions by using CDMA in the entire cells.

Naturally, for the examples shown in fig. 5, 6, 6a and 6b steps 1, 2, 3, 4, 5 as described in fig. 3, remain applicable. The scheduling of the transmissions still takes into account the bandwidth support capabilities of the active mobile terminals present and any other parameter necessary depending on the case. The sharing of the bandwidth between the cells, can be performed by the BSC 100 which is in charge of the cells that are to share the bandwidth, or in the case that the cells are grouped under different BSCs 100, then the BSCs will co-ordinate the sharing between them. Once the sharing is done the BSCs 100 will arrange for the transmissions to be executed.

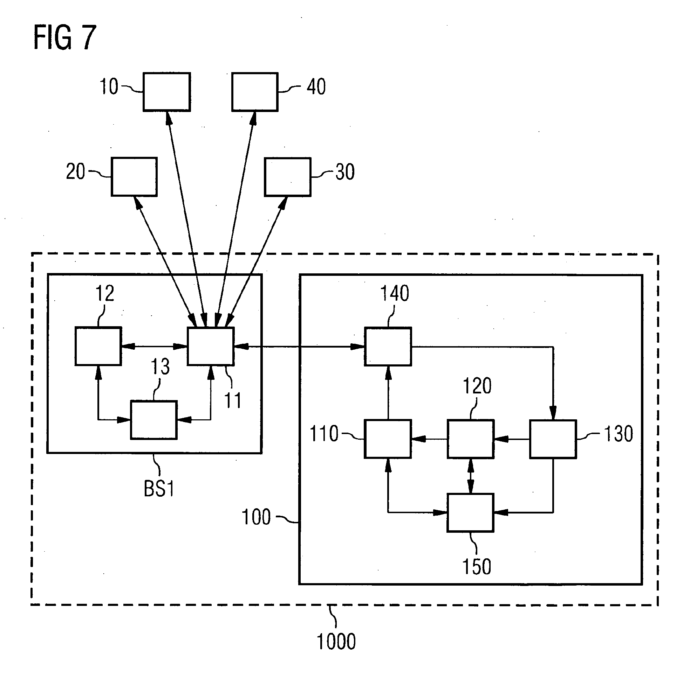

Fig. 7, shows in block diagram form an arrangement of means comprised in a BSS 1000 that are adapted to execute the proposed technique.

The BSC 100 comprises of scheduling means 110 coupled to transmit/receive means 140 which in turn are coupled to acquiring means 130. Grouping means 120 are in turn coupled to both scheduling 110 and acquiring 130 means. All these means are coupled and under the supervision of control means 150. In the event that UMTS is used, alternatively, an RNC (not depicted) comprising the same means is used to execute the inventive technique.

Within the BSS 1000, the BSC 100 is coupled to a base station transceiver BS1 and preferably to transmit/receive means 11 arranged to transmit and receive transmissions from active terminals (10, 20, 30, 40, 50, 60, 70, 75, 80, 85) located in the cell covered by each respective BSS 1000. Coupled to this are monitoring means 12, which are adapted to monitor the number of active terminals transmitting to the BSS 1000 via an exchange of control signalling. These means are also coupled to and under the supervision of control means 13.

The acquiring means 130 use the information generated by the monitoring means 12 and received by the transmit/receive means 140, acquire information relating to the number of active terminals within the coverage area of the base station 1000 and their respective bandwidth requirements or capabilities. Under the supervision of the control means 150, this information is passed on to the grouping means 120, which in turn group the active terminals into a number of groups according to a bandwidth capability of each active terminal. Each group comprises of active terminals that have a similar bandwidth capability or requirement. In the event of a new terminal becoming active, for example when it is switched on, it will be added to an appropriate group or placed in an own group, after the necessary information has been acquired and processed by the grouping means 120.

Upon the different groups being set up, the scheduling means 110, use a timing structure which comprises of a TTI to transmit via the transmit/receive means 140 and 11, to each group of active terminals, whereby in each transmission to a particular group of the dedicated bandwidth is used.

Additionally, the scheduler means 110 are also adapted to take into account other parameters apart from the bandwidth capabilities of the active terminals, when scheduling transmissions to the groups of active terminals. Such parameters, acquired by the acquiring means 130 can be for example a condition of the radio link between the BSS 1000 and each one of the different groups of active terminals, a link budget of each link, a buffer state of the BSS 1000 indicating for example the amount of data waiting to be transmitted to each group.

Although the invention has been described in terms of preferred embodiments described herein, those skilled in the art will appreciate other embodiments and modifications which can be made without departing from the scope of the teachings of the invention. All such modifications are intended to be included within the scope of the claims appended hereto.

## Claims

1. Method for scheduling, in a communications system (1) supporting a dedicated bandwidth, a transmission between a radio access network (1000) and a plurality of terminals (10, 20, 30, 40, 50, 60, 70, 75, 80, 85), comprising the steps of:
- acquiring information concerning a number of active terminals of said plurality of terminals (step 1);
- grouping, upon acquisition of said information, said active terminals (10, 20, 30, 40, 50, 60, 70, 75, 80, 85) into a plurality of groups (G₁, G₂, G₃) according to a bandwidth capability of each active terminal (10, 20, 30, 40, 50, 60, 70, 75, 80, 85), wherein each group of said plurality of groups (G₁, G₂, G₃) comprises of said active terminals having a similar bandwidth capability (step 2);
- scheduling, using a timing structure, said transmission to said groups (G₁, G₂, G₃), using at least part of said dedicated bandwidth (step 3).

2. Method according to claim 1, wherein said active terminals (10, 20, 30, 40, 50, 60, 70, 75, 80, 85) are terminals in a ready and/or in a block flow state.

3. Method according to claim 1, wherein said information is acquired by monitoring a control signalling exchange between said number of active terminals and said radio access network (1000).

4. Method according to claim 1, wherein said timing structure comprises of a timing interval used for said transmission.

5. Method according to any one of the previous claims 1 to 4, wherein through the use of at least one parameter a further grouping of said active terminals is performed.

6. Method according to claim 5, wherein said parameter is at least one of the following:
a state of a capacity of a transmission buffer of said radio access network (1000), a condition of a radio signal between said radio access network (1000) and said terminals, a service requirement of said transmission.

7. Method according to any one of the previous claims 1 to 6, wherein said dedicated bandwidth is allocated either to a cell or to a plurality of cells of said communications system (1).

8. Method according to claim 7, wherein when said dedicated bandwidth is allocated to said plurality of cells, said allocation is effected by sharing said dedicated bandwidth among said plurality of cells in a co-ordinated manner according to a bandwidth requirement of each cell of said plurality of cells.

9. Method according to claim 1, wherein a Frequency Division Multiple Access mode and/or a Code Division Multiple Access mode is implemented in said communications system (1).

10. Method according to any of the previous claims 1 to 9, wherein an Orthogonal Frequency Division Multiplexing technique is used in said communications system (1) for said transmission.

11. Device (100), in a communications system (1), comprising means arranged to schedule a transmission between a radio access network (1000) and a plurality of terminals (10, 20, 30, 40, 50, 60, 70, 75, 80, 85) according to claim 1.

12. Device (100) according to claim 11, wherein said device is a base station controller or a radio network controller.

13. Communications system (1) comprising at least one device (100) according to claims 11 to 12.
